# EUROPÄISCHE PATENTSCHRIFT

(11) **EP 1 792 095 B1**
(45) Veröffentlichungstag und Bekanntmachung des Hinweises auf die Patenterteilung: **14.10.2009**
(21) Anmeldenummer: 05768067.0
(22) Anmeldetag: 13.07.2005
(51) Int. Cl.: F16D 3/26

(54) **KUPPLUNG ZUR DREHMOMENTÜBERTRAGUNG**
CLUTCH FOR TORQUE TRANSMISSION
EMBRAYAGE POUR LA TRANSMISSION D'UN COUPLE DE ROTATION

(30) Priorität: 23.09.2004 DE 102004046527
(43) Veröffentlichungstag der Anmeldung: 06.06.2007
(73) Patentinhaber: MAHLE Filtersysteme GmbH, 70376 Stuttgart (DE)
(72) Erfinder: WEBER, Thomas, 73650 Winterbach (DE)
(74) Vertreter: Rotermund, Hanns-Jörg
(86) Internationale Anmeldenummer: PCT/DE2005/001239
(87) Internationale Veröffentlichungsnummer: WO 2006/032225

(56) Entgegenhaltungen:
- EP-B- 1 040 266
- GB-A- 1 170 238
- US-A- 2 251 126
- US-A- 2 780 079
- US-B1- 6 517 439

## Beschreibung

Die vorliegende Erfindung betrifft eine Kupplung zur Drehmomentübertragung zwischen einem treibenden Element und einem getriebenen Element.

Bei einer Vielzahl von Anwendungen ist es erforderlich, ein Drehmoment von einem treibenden Element, z.B. ein Stellantrieb, auf ein getriebenes Element, z.B. ein Stellglied, zu übertragen, um dadurch das getriebene Element antreiben zu können. Da antreibendes und getriebenes Element häufig separat voneinander hergestellt werden und/oder in unterschiedlichen Baugruppen angeordnet werden, scheidet eine direkte Drehverbindung zwischen dem treibenden Element und dem getriebenen Element häufig aus. In diesen Fällen kommt dann eine Kupplung der eingangs genannten Art zur Anwendung, welche eine indirekte Drehverbindung zwischen treibendem Element und getriebenem Element bereitstellt. Hierzu umfasst die Kupplung regelmäßig zwei Anschlusskörper, von denen der eine mit dem treibenden Element und der andere mit dem getriebene Element drehfest verbindbar ist.

Durch die separate Herstellung und/oder voneinander unabhängige Montage von getriebenem Element und treibendem Element kommt es aufgrund von Herstellungs- und Montagetoleranzen im montierten Zustand zu Positionsabweichungen zwischen treibendem Element und getriebenem Element, die von der jeweiligen Kupplung aufgenommen bzw. toleriert werden müssen. Dies ist insbesondere bei der zunehmende Verwendung von Kunststoffbauteilen von besonderer Bedeutung, da beispielsweise bei Spritzgussbauteilen größere Schwankungen in der Maßhaltigkeit auftreten.

Aus der EP 1 040 266 B1 ist ein Abgasrückführventil bekannt, das einen Stellantrieb aufweist, der eine Antriebswelle drehend antreibt. Das Abgasrückführventil enthält außerdem ein Stellglied, das mit Hilfe des Stellantriebs zur Durchführung eines Axialhubs angetrieben wird. Hierzu muss die Drehbewegungen des Stellantriebs in eine Hubbewegung des Stellglieds umgewandelt werden. Zu diesem Zweck trägt die Antriebswelle drehfest einen gabelförmigen Mitnehmer, während das Stellglied eine Querachse axial fest trägt. Die Querachse ist dabei mit dem Mitnehmer drehfest gekoppelt und darin axial verstellbar gelagert. Desweiteren ragt die Querachse mit ihren Enden in schraubenförmige Führungsnuten ein. Bei einer Drehverstellung der Antriebswelle des Stellantriebs nimmt der Mitnehmer die Querachse mit, wobei diese den Führungsnuten folgt und dementsprechend einen Axialhub durchführt. Dabei bewegt sich die Querachse außerdem in Axialrichtung relativ zum Mitnehmer.

Das Dokument GB 1170238 offenbart eine Kupplung gemäß dem Oberbegriff des Anspruchs 1.

Die vorliegende Erfindung beschäftigt sich mit dem Problem, für eine Kupplung der eingangs genannten Art eine verbesserte Ausführungsform anzugeben, die insbesondere relativ große Lagetoleranzen zwischen treibendem Element und getriebenem Element tolerieren kann.

Dieses Problem wird erfindungsgemäß durch die Gegenstände der unabhängigen Ansprüche 1 und 8 gelöst. Vorteilhafte Ausführungsformen sind Gegenstand der abhängigen Ansprüche.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf eine erfindungsgemäße Kupplung,
- Fig. 2: eine Ansicht wie in Fig. 1, jedoch in auseinander gezogener Darstellung,
- Fig. 3: einen Längsschnitt durch die erfindungsgemäße Kupplung in einer ersten Schnittebene und
- Fig. 4: einen Längsschnitt wie in Fig. 3, jedoch in einer um 90° versetzten Schnittebene.

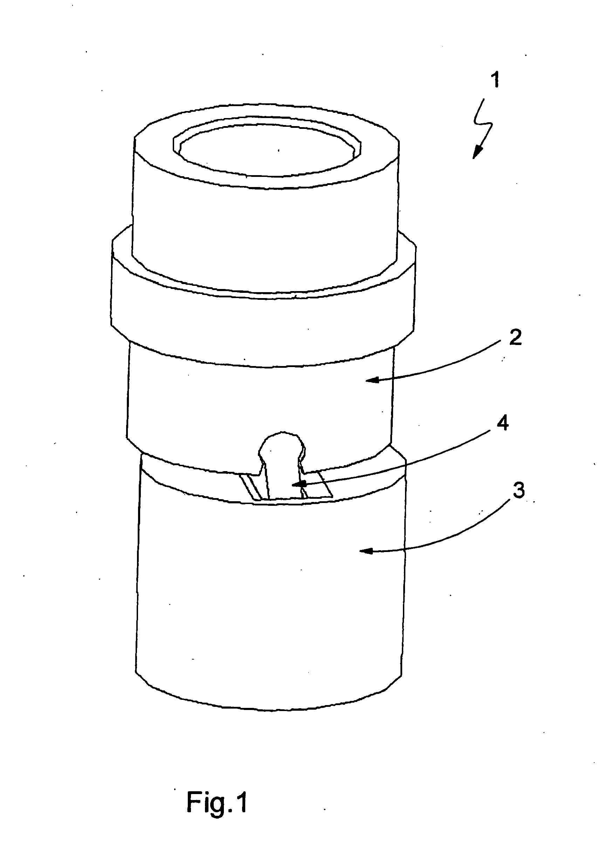

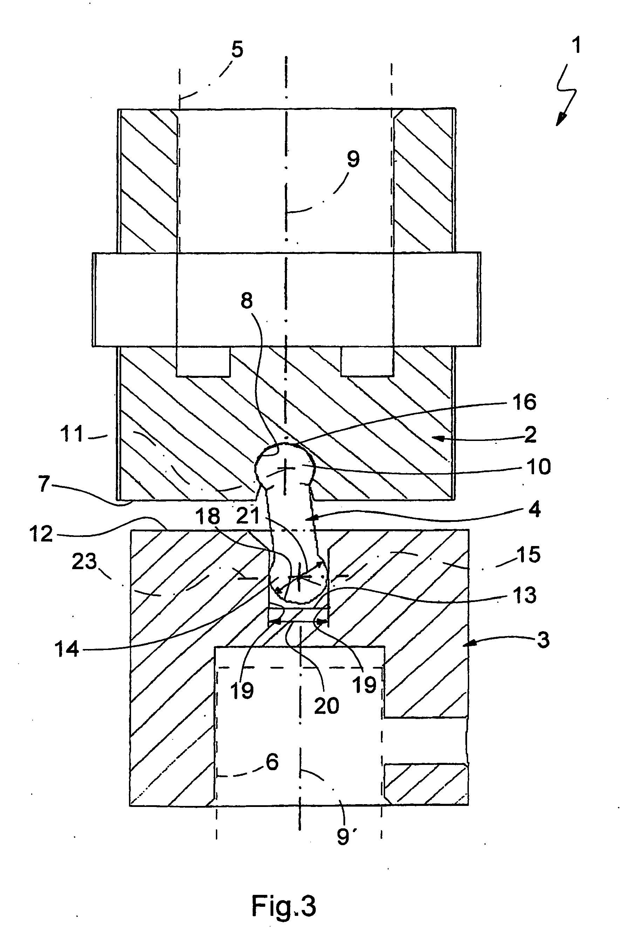

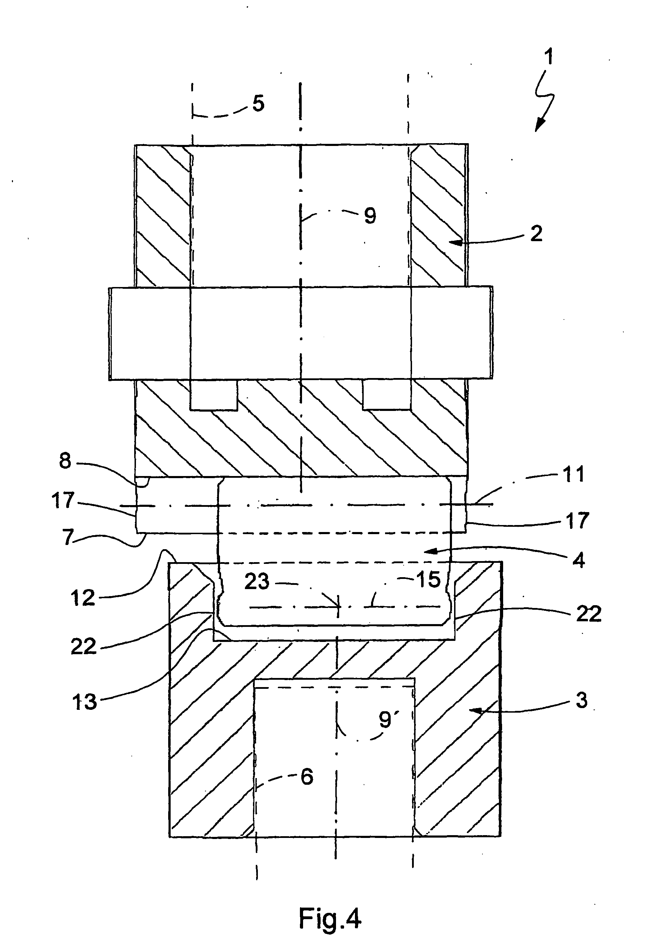

Entsprechend den Fig. 1 bis 4 umfasst eine erfindungsgemäße Kupplung 1 zwei Anschlusskörper, nämlich einen ersten Anschlusskörper 2 und einen zweiten Anschlusskörper 3, sowie einen Kupplungskörper 4. Die Kupplung 1 dient zur Drehmomentübertragung zwischen zwei Elementen 5, 6, von denen das eine treibend und das andere getrieben ist. Das treibende und das getriebene Element 5, 6 sind in den Fig. 3 und 4 mit unterbrochenen Linien angedeutet.

Die beiden Anschlusskörper 2, 3 dienen zur Verbindung der Kupplung 1 mit den beiden Elementen 5, 6. Dabei ist der eine Anschlusskörper 2 oder 3 mit dem treibenden Element 5 oder 6 drehfest verbindbar, während der anderen Anschlusskörper 2 oder 3 mit dem getriebenen Element 5 oder 6 drehfest verbindbar ist. Die drehfeste Anbindung zwischen dem jeweiligen Anschlusskörper 2, 3 und dem jeweiligen Element 5, 6 kann dabei in üblicherweise erfolgen und muss daher hier nicht näher erläutert werden.

Der Kupplungskörper 4 dient zur drehfesten Verbindung der beiden Anschlusskörper 2, 3, was im folgenden insbesondere mit Bezug auf die Fig. 3 und 4 näher erläutert wird.

Der erste Anschlusskörper 2 enthält an einer dem zweiten Anschlusskörper 3 zugewandten Stirnseite 7 eine erste Nut 8.
Die erste Nut 8 erstreckt sich dabei quer zu einer durch eine strichpunktierte Linie angedeutete Drehachse 9, um welche die Kupplung 1 bzw. zumindest ihr erster Anschlusskörper 2 bei der Drehmomentübertragung drehend angetrieben wird. In diese erste Nut 8 greift der Kupplungskörper 4 mit einem ersten Ende 10 ein, und zwar so, dass er in der ersten Nut 8 in einer Nutlängsrichtung 11 verschiebbar und um die Nutlängsrichtung 11 verschwenkbar gehaltert ist.

Im Unterschied dazu besitzt der zweite Anschlusskörper 3 an einer dem ersten Anschlusskörper 2 zugewandten Stirnseite 12 eine zweite Nut 13, die sich ebenfalls quer zu einer zugehörigen Drehachse 9' erstreckt. Der Kupplungskörper 4 greift mit einem zweiten Ende 14 in die zweite Nut 13 ein, und zwar so, das er in der zweiten Nut 13 parallel zur Drehachse 9' verschiebbar und um eine Nutlängsachse 15 verschwenkbar gehaltert ist.

Der Kupplungskörper 4 besitzt bezüglich des ersten Anschlusskörpers 2 zwei Freiheitsgrade, nämlich Drehverstellbarkeit um die Nutlängsachse 11 und Längsverschiebbarkeit in der Nutlängsrichtung 11. Desweiteren besitzt der Kupplungskörper 4 gegenüber dem zweiten Anschlusskörper 3 zumindest zwei Freiheitsgrade, nämlich Schwenkverstellbarkeit um die Nutlängsachse 15 sowie Längsverstellbarkeit parallel zur Drehachse 9' und gegebenenfalls Längsverschiebbarkeit in Nutlängsrichtung 15. Insgesamt ergeben sich somit zumindest drei Freiheitsgrade für die Kopplung zwischen den beiden Anschlusskörpern 2, 3. Insbesondere können beiden Anschlusskörper 2, 3 - wie in Fig. 3 dargestellt - so zueinander versetzt angeordnet sein, dass die beiden Nuten 8 und 13 nicht genau zueinander fluchten. Dies wird durch die Verschwenkbarkeit und Längsverschiebbarkeit des Kupplungskörpers 4 sowohl relativ zum ersten Anschlusskörper 2 als auch relativ zum zweiten Anschlusskörper 3 ermöglicht. Desweiteren kann der Abstand zwischen den beiden Anschlusskörpern 2, 3 variieren, was durch die Verschiebbarkeit des Kupplungskörpers 4 parallel zur Drehachse 9 relativ zum zweiten Anschlusskörper 3 ermöglicht wird.

Fig. 4 zeigt eine weitere Positionsvariante zwischen den beiden Anschlusskörpern 2, 3, bei der diese parallel zu ihren Nutlängsachsen 11, 15 exzentrisch zueinander angeordnet sind. Ermöglicht wird diese Positionierung durch die Längsverstellbarkeit des Kupplungskörpers 4 relativ zum ersten Anschlusskörper 2. Desweiteren können die beiden Anschlusskörper 2, 3 außerdem zueinander gekippt sein, was hier jedoch nicht dargestellt ist. Durch ein Kippen der Anschlusskörper 2, 3 gegeneinander sind die Drehachsen 9, 9' der beiden Anschlusskörper 2, 3 zueinander geneigt. Dabei kann der Kupplungskörper 4 aufgrund eines entsprechenden Spiels in der Nutlängsrichtung 15 außerdem um eine Kippachse 23 kippen oder drehen, die senkrecht auf der Drehachse 9' und senkrecht auf der Nutlängsrichtung 15 steht.

Gemäß der hier gezeigten, bevorzugten Ausführungsform besitzt der Kupplungskörpers 4 in einem Profil quer zu den Nutlängsrichtungen 11, 15 eine hantelförmige oder knochenförmige Kontur. Insbesondere weist der Kupplungskörper 4 an seinem ersten Ende 10 im Profil eine kreissegmentförmige Verdickung 16 auf, die sich bezüglich der Nutlängsrichtung 11 beispielsweise um einen Winkel von etwa 270° erstreckt. Die erste Nut 8 besitzt hierzu ein komplementäres kreissegmentförmiges Profil. Von besondere Bedeutung ist hierbei, dass das komplementäre Profil der ersten Nut 8 die Verdickung 16 um mehr als 180° umgreift. Auf diese Weise ist der Kupplungskörper 4 parallel zur Drehachse 9 ausziehsicher formschlüssig gehaltert. Entsprechend Fig. 4 besitzt die erste Nut 8 zumindest ein offenes Längsende 17. Im vorliegenden Fall sind zwei offene Längsenden 17 vorgesehen. Durch die offenen Längsenden 17 ist das erste Ende 10 des Kupplungskörpers 4 in Nutlängsrichtung 11 in die erste Nut 8 einführbar.

Um die Schwenkverstellbarkeit des Kopplungskörpers 4 um die Nutlängsrichtung 11 der ersten Nut 8 zu unterstützen, ist die erste Nut 8 im Profil an ihrer zum zweiten Anschlusskörper 3 hin offenen Seite nach außen trichterförmig aufgeweitet. Auf diese Weise wird der winkelmäßige Verstellbereich des Kupplungskörpers 4 relativ zum ersten Anschlusskörper 1 definiert.

Vorzugsweise erstreckt sich die erste Nut 8 durch eine Längsmittelachse des zugehörigen Anschlusskörpers 2 hindurch, die im vorliegenden Fall mit der Drehachse 9 zusammenfällt.

Bei der hier gezeigten, bevorzugten Ausführungsform ist der Kupplungskörper 4 auch an seinem zweiten Ende 14 im Profil mit einer kreissegmentförmigen Verdickung 18 versehen, die grundsätzlich baugleich zur Verdickung 16 am ersten Ende 10 gestaltet sein kann. Die zweite Nut 13 weist zwei Seitenwände 19 auf, die eben sind und zueinander parallel verlaufen. Dabei besitzen die beiden Seitenwände 19 voneinander einen Abstand 20, der im wesentlichen gleich groß dimensioniert ist wie ein Durchmesser 21, den die Verdickung 18 des zweiten Endes 14 aufweist. Auf diese Weise berührt der Kupplungskörper 4 an seinem zweiten Enden 14 die beiden Seitenwände 19 gleichzeitig. Außerdem wird hierdurch die Schwenkverstellbarkeit um die Nutlängsrichtung 15 der zweiten Nut 13 erreicht. Zusätzlich ermöglichen die parallelen Seitenwände 19 die Längsverstellbarkeit des Kupplungskörpers 4 parallel zur Drehachse 9, 9'.

Zweckmäßig ist auch die zweite Nut 13 im Profil so gestaltet, dass sie sich an ihrer zum ersten Anschlusskörper 2 hin offenen Seite nach außen trichterförmig aufweitet. Auch diese Maßnahme unterstützt die Schwenkverstellbarkeit des Kupplungskörpers 4 relativ zum zweiten Anschlusskörper 3. Gleichzeitig wird dadurch auch der maximale Schwenkbereich für den Kupplungskörper 4 relativ zum zweiten Anschlusskörper 3 winkelmäßig definiert.

Wie aus Fig. 4 hervorgeht, weist die zweite Nut 13 vorzugsweise verschlossene Längsenden 22 auf. Auf diese Weise ist der Kupplungskörper 4 in der Nutlängsrichtung 15 der zweiten Nut 13 nicht oder nur begrenzt längsverstellbar. Zweckmäßig ist die zweite Nut 13 so positioniert, dass sie sich durch eine Längsmittelachse des zweiten Anschlusskörpers 3 hindurch erstreckt. Auch hier fällt die Längsmittelachse des zweiten Anschlusskörpers 3 mit dessen Drehachse 9' zusammen.

Um eine besonders günstige Momentübertragung zwischen den beiden Anschlusskörpern 2, 3 mit Hilfe des Kupplungskörpers 4 erzielen zu können, ist der Kupplungskörper 4 in den Nutlängsrichtungen 11, 15 vergleichsweise groß dimensioniert. Insbesondere ist der Kupplungskörper 4 in der jeweiligen Nutlängsrichtung 11, 15 größer als ein halber Durchmesser des jeweiligen Anschlusskörpers 2, 3, gemessen in der Ebene der jeweiligen Nut 8, 13.

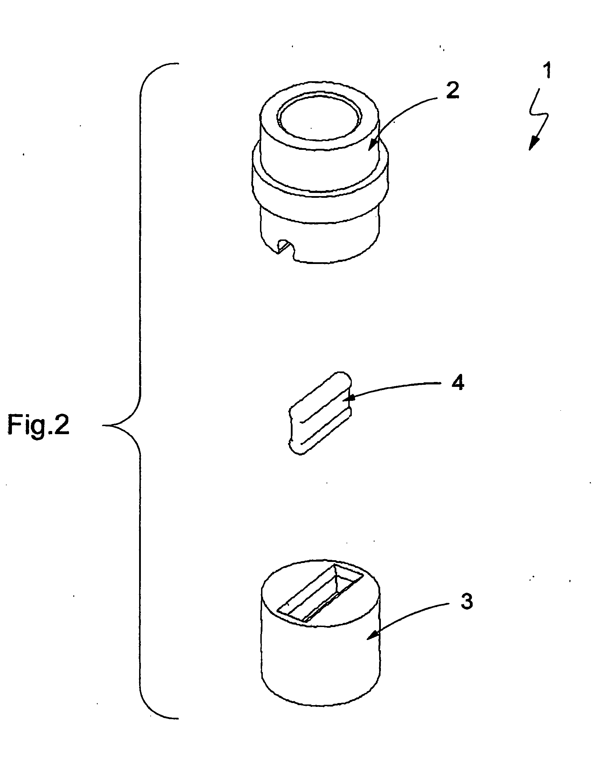

Für den Zusammenbau der Kupplung 1 wird der Kupplungskörper 4 gemäß Fig. 2 mit seinem ersten Ende 10 durch ein offenes Längsende 17 der ersten Nut 8 in Nutlängsrichtung 11 der ersten Nut 8 in die erste Nut 8 eingeführt. Im Unterschied dazu wird das zweite Ende 14 des Kupplungskörpers 4 parallel zur Drehachse 9, 9' in die zweite Nut 13 eingeführt. Im montierten Zustand ist der Kupplungskörper 4, obwohl er mehrere Freiheitsgrade aufweist, verliersicher zwischen den beiden Anschlusskörpern 2, 3 gehaltert.

Eine bevorzugte Verwendung der erfindungsgemäßen Kupplung 1 wird in einer hier nicht gezeigten Klappenstelleinrichtung gesehen, die einen Stellantrieb sowie eine Klappenanordnung mit wenigstens einer Klappe aufweist. Der Stellantrieb bildet dann das treibende Element, während die Klappenanordnung das getriebene Elemente darstellt. Über die erfindungsgemäße Kupplung 1 können hierbei der Stellantrieb und die Klappenanordnung miteinander zur Übertragung von Drehmomenten verbunden werden. Dabei handelt es sich bei der Klappenstelleinrichtung vorzugsweise um eine Ausführungsform, bei welcher der Stellantrieb die Klappenanordnung lediglich in einem Winkelbereich von 0° bis maximal 90° verstellt. Derartige Klappenstelleinrichtungen finden sich beispielsweise in einem Frischlufttrakt einer Brennkraftmaschine. Beispielsweise handelt es sich bei den zu verstellenden Klappen um Tumbleklappen oder Drallklappen. Ebenso ist eine Anwendung denkbar, bei der mit Hilfe von Klappen unterschiedliche Saugrohrlängen in einer Sauganlage aktiviert bzw. deaktiviert werden. Auch sind bei anderen Anwendungen größere Stellwinkel einstellbar.

Bei derartigen Sauganlagen bzw. Frischlufttrakten kommen aufgrund vergleichsweise niedriger Betriebstemperaturen vermehrt Kunststoffe zum Einsatz. Bei komplexen Bauteilen kann es dabei zu relativ großen Lagetoleranzen zwischen dem Stellantrieb einerseits und der Klappenanordnung andererseits kommen. Mit Hilfe der erfindungsgemäßen Kupplung 1 können diese relativ großen und auch komplexen Positionstoleranzen ausgeglichen werden. Außerdem können mit Hilfe der erfindungsgemäßen Kupplung 1 auch bei vergleichsweise großen Positionstoleranzen eine sichere Momentübertragung und somit eine sichere Funktionsweise der jeweiligen Klappenstelleinrichtung erreicht werden.

## Patentansprüche

1. Kupplung zur Drehmomentübertragung zwischen einem treibenden Element (5, 6) und einem getriebenen Element (5, 6),
- mit zwei Anschlusskörpern (2, 3), von denen der eine mit dem treibenden Element (5, 6) und der andere mit dem getriebenen Element (5, 6) drehfest verbindbar ist,
- mit einem Kupplungskörper (4), der die beiden Anschlusskörper (2, 3) drehfest miteinander verbindet,
- wobei der eine Anschlusskörper (2) an einer Stirnseite (7) eine erste Nut (8) aufweist, die sich quer zu einer Drehachse (9) dieses Anschlusskörpers (2) erstreckt und in die der Kupplungskörper (4) in Nutlängsrichtung (11) verschiebbar und um die Nutlängsrichtung (11) verschwenkbar eingreift,
- wobei der andere Anschlusskörper (3) an einer Stirnseite (12) eine zweite Nut (13) aufweist, die sich quer zu einer Drehachse (9') dieses Anschlusskörpers (3) erstreckt und in die der Kupplungskörper (4) parallel zur Drehachse (9, 9') verschiebbar und um die Nutlängsrichtung (15) verschwenkbar eingreift,
**dadurch gekennzeichnet,**
- **dass** der Kupplungskörper (4) an seinem in die erste Nut (8) eingreifenden ersten Ende (10) im Profil eine kreissegmentförmige Verdickung (16) aufweist,
- **dass** die erste Nut (8) ein zum ersten Ende (10) des Krupplungskörpers (4) komplementäres kreissegmentförmiges Profil aufweist, welches das erste Ende (10) des Kupplungskörpers (4) um mehr als 180° umgreift,
- **dass** die erste Nut (8) zumindest ein offenes Längsende (17) aufweist, durch das der Kupplungskörper (4) in Nutlängsrichtung (11) in die erste Nut (8) einführbar ist,
- **dass** der Kupplungskörper (4) an seinem in die zweite Nut (13) eingreifenden zweiten Ende (14) im Profil eine kreissegmentförmige Verdickung (18) aufweist,
- **dass** die zweite Nut (13) zwei ebene und zueinander parallele Seitenwände (19) aufweist, deren Abstand (20) dem Durchmesser (21) der Verdickung (18) des zweiten Endes (14) des Kupplungskörpers (4) entspricht.

2. Kupplung nach Anspruch 1,
**dadurch gekennzeichnet,**
**dass** sich die erste Nut (8) im Profil an ihrer offenen Seite nach außen trichterförmig aufweitet.

3. Kupplung nach Anspruch 1 oder 2,
**dadurch gekennzeichnet,**
**dass** sich die erste Nut (8) durch eine Längsmittelachse des zugehörigen Anschlusskörpers (2) hindurch erstreckt.

4. Kupplung nach einem der Ansprüche 1 bis 3,
**dadurch gekennzeichnet,**
**dass** sich die zweite Nut (13) im Profil an ihrer offenen Seite nach außen trichterförmig aufweitet.

5. Kupplung nach einem der Ansprüche 1 bis 4,
**dadurch gekennzeichnet,**
**dass** die zweite Nut (13) verschlossene Längsenden (22) aufweist.

6. Kupplung nach einem der Ansprüche 1 bis 5,
**dadurch gekennzeichnet,**
**dass** sich die zweite Nut (13) durch eine Längsmittelachse des zugehörigen Anschlusskörpers (3) hindurch erstreckt.

7. Kupplung nach einem der Ansprüche 1 bis 6,
**dadurch gekennzeichnet,**
**dass** die Nuten (8, 13) und der Kupplungskörper (4) in der jeweiligen Nutlängsrichtung (11, 15) größer dimensioniert sind als ein halber Durchmesser des jeweiligen Anschlusskörpers (2, 3) in der Ebene der jeweiligen Nut (8, 13).

8. Verwendung einer Kupplung nach einem der Ansprüche 1 bis 7 in einer Klappenstelleinrichtung, wobei das treibende Element (5, 6) ein Stellantrieb ist und das getriebene Element (5, 6) eine Klappenanordnung mit wenigstens einer Klappe ist, wobei der Stellantrieb die Klappenanordnung in einem Winkelbereich von 0° bis maximal 90° verstellt.

9. Klappenstelleinrichtung, insbesondere in einem Frischlufttrakt einer Brennkraftmaschine, mit einem Stellantrieb, der über eine Kupplung (1) nach einem der Ansprüche 1 bis 7 mit einer Klappenanordnung mit wenigstens einer Klappe gekoppelt ist und zur Drehbetätigung der Klappenanordnung ausgebildet ist.

## Claims

1. A clutch for transmitting torque between a driving element (5, 6) and a driven element (5, 6),
- having two connecting bodies (2, 3) of which the one is connectable in a rotationally-fixed manner to the driving element (5, 6), and the other is connectable in a rotationally-fixed manner to the driven element (5, 6),
- with a clutch body (4) that connects both of the connecting bodies (2, 3) to one another in a rotationally-fixed manner,
- wherein the one connecting body (2) has a first groove (8) on a front face (7), said groove extending transversely to an axis of rotation (9) of this connecting body (2) and in which the connecting body (4) is movable in the longitudinal direction of the groove (11) and pivotingly engages therewith about the longitudinal direction of the groove,
- wherein the other connecting body (3) has a second groove (13) on a front face (12), said groove extending transversely to a rotational axis (9') of this connecting body (3) and in which the clutch body (4) is movable parallel to the axis of rotation (9, 9') and pivotingly engages therewith about the longitudinal direction of the groove (15),
**characterised in that**
- the clutch body (4) has a circular-segment-shaped thickening (16) on the profile on its first end (10) that engages with the first groove (8)
- the first groove (8) has a circular-segment-shaped profile that is complementary to the first end (10) on the clutch body (4), said profile encompassing the first end (10) of the clutch body (4) by more than 180°,
- the first groove (8) has at least one open longitudinal end (17) through which the clutch body (4) can be inserted into the first groove (8) in the longitudinal direction of the groove (11),
- the second groove (13) has two level lateral walls (19), which are parallel to one another, their distance (20) corresponding to the diameter (21) of the thickening (18) of the second end (14) of the clutch body (4).

2. The clutch as specified in claim 1,
**characterised in that**
the first groove (8) outwardly expands in a funnel-like manner on its open side in the profile.

3. The clutch as specified in claim 1 or claim 2,
**characterised in that**
the first groove (8) extends through a longitudinal middle axis on the associated connecting body (2).

4. The clutch as specified in any one of the claims 1 to 3,
**characterised in that**
the second groove (13) outwardly expands in profile in a funnel-like manner on its open side.

5. The clutch as specified in any one of the claims 1 to 4,
**characterised in that**
the second groove (13) has closed longitudinal ends (22).

6. The clutch as specified in any one of the claims 1 to 5,
**characterised in that**
the second groove (13) extends through a longitudinal middle axis on the associated connecting body (3).

7. The clutch as specified in any one of the claims 1 to 6,
**characterised in that**
the grooves (8, 13) and the clutch body (4) are dimensioned more largely in the respective longitudinal direction of the groove (11, 15) than half the diameter of the respective connecting body (2, 3) in the plane of the respective groove (8, 13).

8. A use of a clutch as specified in any one of the claims 1 to 7 in a flap positioning device, wherein the driving element (5, 6) is an actuating drive and the driven element (5, 6) is a flap arrangement having at least one flap, wherein the actuating drive adjusts the flap arrangement in an angle range of 0° to maximally 90°.

9. A flap positioning device, in particular in a fresh-air tract of an internal combustion engine, having an actuating drive that is coupled, by means of a clutch (1) as specified in any one of the claims 1 to 7, to a flap arrangement having at least one flap and being designed for actuating the rotation of the flap arrangement.

## Revendications

1. Embrayage pour la transmission d'un couple de rotation entre un élément menant (5,6) et un élément mené (5,6),
- comportant deux corps de raccordement (2,3), desquels un peut être relié de manière solidaire en rotation à l'élément menant (5,6) et l'autre à l'élément mené (5,6),
- comportant un corps d'embrayage (4), qui relie l'un à l'autre de manière solidaire en rotation les deux corps de raccordement (2,3),
- dans lequel un des corps de raccordement (2) présente sur un côté frontal (7) une première rainure (8), qui s'étend transversalement à un axe de rotation (9) de ce corps de raccordement (2) et dans laquelle le corps d'embrayage (4) s'engage de manière déplaçable dans la direction longitudinale de rainure (11) et basculable autour de la direction longitudinale de rainure (11),
- dans lequel l'autre corps de raccordement (3) présente sur un côté frontal (12) une deuxième rainure (13), qui s'étend transversalement à un axe de rotation (9') de ce corps de raccordement (3) et dans laquelle le corps d'embrayage (4) s'engage de manière déplaçable parallèlement à l'axe de rotation (9,9') et basculable autour de la direction longitudinale de rainure (15),
**caractérisé en ce que**
- le corps d'embrayage (4) présente à sa première extrémité (10) s'engageant dans la première rainure (8) dans le profilé un épaississement en forme d'arc de cercle,
- la première rainure (8) présente un profilé en forme d'arc de cercle complémentaire à la première extrémité (10) du corps d'embrayage (4), lequel s'engage autour de la première extrémité (10) du corps d'embrayage (4) à plus de 180°,
- la première rainure (8) présente au moins une extrémité longitudinale (17) ouverte, à travers laquelle le corps d'embrayage (4) peut être inséré dans la direction longitudinale de rainure (11) dans la première rainure,
- le corps d'embrayage (4) présente à sa deuxième extrémité (14) s'engageant dans la deuxième rainure (13) dans le profilé un épaississement (18) en forme d'arc de cercle,
- la deuxième rainure (13) présente deux parois latérales (19) planes et parallèles l'une à l'autre, dont l'espacement (20) correspond au diamètre (21) de l'épaississement (18) de la deuxième extrémité (14) du corps d'embrayage (4).

2. Embrayage selon la revendication 1,
**caractérisé en ce que**
la première rainure (8) dans le profilé s'élargit sur son côté ouvert en forme d'entonnoir vers l'extérieur.

3. Embrayage selon la revendication 1 ou 2,
**caractérisé en ce que**
la première rainure (8) s'étend à travers un axe médian longitudinal du corps de raccordement (2) afférent.

4. Embrayage selon une des revendications 1 à 3,
**caractérisé en ce que**
la deuxième rainure (13) s'élargit dans le profilé sur son côté ouvert en forme d'entonnoir vers l'extérieur.

5. Embrayage selon une des revendications 1 à 4,
**caractérisé en ce que**
la deuxième rainure (13) présente des extrémités longitudinales (22) fermées.

6. Embrayage selon une des revendications 1 à 5,
**caractérisé en ce que**
la deuxième rainure (13) s'étend à travers un axe médian longitudinal du corps de raccordement (3) afférent.

7. Embrayage selon une des revendications 1 à 6,
**caractérisé en ce que**
les rainures (8,13) et le corps d'embrayage (4) ont des dimensions plu grandes dans la direction longitudinale de rainure (11,15) respective qu'un demi diamètre du corps de raccordement (2,3) respectif dans le plan de la rainure (8,13) respective.

8. Utilisation d'un embrayage selon une des revendications 1 à 7 dans un dispositif de réglage de clapet, dans lequel l'élément menant (5,6) est un servo-entraînement et l'élément mené (5,6) est un dispositif de clapet comportant au moins un clapet, dans lequel le servo-entraînement règle le dispositif de clapet dans un secteur angulaire allant de 0° à 90° au maximum.

9. Dispositif de réglage de clapet, notamment dans une admission d'air frais d'un moteur à combustion interne, comportant un servo-entraînement, qui est couplé par l'intermédiaire d'un embrayage (1) selon une des revendications 1 à 7 à un dispositif de clapet comportant au moins un clapet et est conçu afin d'actionner la rotation du dispositif de clapet.
